# EUROPEAN PATENT APPLICATION

(11) **EP 4 633 282 A1**
(43) Date of publication of application: **15.10.2025**
(21) Application number: 23915398.4
(22) Date of filing: 13.01.2023
(51) Int. Cl.: H04W 76/28, H04W 52/02

(54) **COMMUNICATION METHOD AND RELATED APPARATUS**

(71) Applicant: Huawei Technologies Co., Ltd., Shenzhen, Guangdong 518129 (CN)
(72) Inventor: WEI, Dongdong, Shenzhen, Guangdong 518129 (CN); WANG, Fan, Shenzhen, Guangdong 518129 (CN); ZHANG, Zhang, Shenzhen, Guangdong 518129 (CN); FENG, Qi, Shenzhen, Guangdong 518129 (CN)
(74) Representative: Gill Jennings & Every LLP
(86) International application number: PCT/CN2023/072204
(87) International publication number: WO 2024/148629

(57) **Abstract**

This application provides a communication method and a related apparatus, to reduce energy consumption of a network device. The method includes: The network device sends a plurality of DTX configurations to a terminal device, where any two of the plurality of DTX configurations are different, the plurality of DTX configurations include a first DTX configuration used to configure at least one first-type active period and a second DTX configuration used to configure at least one second-type active period, and the at least one first-type active period and at least one second active period do not overlap in time domain; and the at least one first-type active period is configured to be used by the network device to perform data transmission with the terminal device, and the at least one second-type active period is configured to be used by the network device to send (or used by the terminal device to receive) a low power wake up signal. The network device and the terminal device communicate in the at least one first-type active period or the at least one second-type active period based on the first DTX configuration and the second DTX configuration.

## Description

### TECHNICAL FIELD

This application relates to the communication field, and in particular, to a communication method and a related apparatus.

### BACKGROUND

As a network scale expands, energy consumption of a network also continuously increases, and consequently, construction costs of a wireless network increase. To reduce the construction costs of the wireless network, energy consumption of a network device and/or a terminal device may be reduced, to reduce energy consumption of the wireless network.

When the network device and the terminal device are in a connected state, data is not always exchanged between the network device and the terminal device. If the terminal device and the network device are always in an active period, energy consumption of the network device and the terminal device is excessively high. Therefore, it is proposed in some solutions that discontinuous reception (discontinuous reception, DRX) configurations are configured for the terminal device and the network device, that is, the terminal device and the network device may be periodically in an active period in a period of time, and in a sleep period in a period of time. In this case, although the energy consumption of the network device and the terminal device can be effectively reduced, there is a problem that when the network device obtains downlink data in the sleep period, the network device cannot send the downlink data to the terminal device because both the network device and the terminal device are in the sleep period, and consequently, waiting time of the downlink data is excessively long, and user experience is affected.

To resolve this problem, it is currently proposed in an existing solution that a low power wake up receiver (low power wake up receiver, LP-WUR) is configured for the terminal device, so that when a main receiver of the terminal device is in a sleep period, a low power wake up signal (low power wake up signal, LP-WUS) (the LP-WUS is sent when the network device obtains the downlink data) from the network device can be received by the LP-WUR that is always in an active period, to wake up the main receiver in the sleep period in a timely manner to receive the downlink data. According to this solution, although a waiting delay of the downlink data can be reduced, because different terminal devices that access a same network device may have inconsistent receiving and sending moments, the network device may need to send LP-WUSs to the different terminal devices at different moments. Therefore, when one network device needs to provide services for a plurality of terminal devices, the network device may always be in a working state (to be specific, the network device needs to be in the working state when the main receiver of the terminal device is in an active period, and the network device is also in the working state when sending an LP-WUS). Consequently, energy consumption of the network device is high.

### SUMMARY

This application provides a communication method and a related apparatus, to reduce energy consumption of a network device.

According to a first aspect, a communication method is provided. The method may be applied to a terminal device including a main receiver and an LP-WUR. For example, the method may be performed by the terminal device, may be performed by a component (for example, a chip or a chip system) configured in the terminal device, or may be implemented by a logical module or software that can implement all or some functions of the terminal device. This is not limited in this application.

For example, the method includes: receiving a plurality of discontinuous transmission (discontinuous transmission, DTX) configurations from a network device, where any two of the plurality of DTX configurations are different, the plurality of DTX configurations include a first DTX configuration and a second DTX configuration, the first DTX configuration is used to configure at least one first-type active period, the at least one first-type active period is configured to be used by the main receiver to receive downlink data or send uplink data, the second DTX configuration is used to configure at least one second-type active period, the at least one second-type active period is configured to be used by the low power wake up receiver to receive a low power wake up signal, and the at least one first-type active period and the at least one second-type active period do not overlap in time domain; and performing communication with the network device in the at least one first-type active period or the at least one second-type active period based on the first DTX configuration and the second DTX configuration.

In this application, a sleep period is included between every two adjacent first-type active periods in the at least one first-type active period corresponding to the main receiver, each sleep period may include one or more second-type active periods corresponding to the low power wake up receiver, and a sleep period is included between the first-type active period and the second-type active period. In this way, the network device may send the downlink data to the terminal device in the first-type active period, or the network device may send the low power wake up signal to the terminal device in the second-type active period, and the network device does not perform communication with the terminal device in the sleep period outside the first-type active period and the second-type active period. In other words, the network device is in a working state in the first-type active period or the second-type active period, and may not need to be in the working state in the sleep period outside the first-type active period and the second-type active period. Therefore, according to the method for configuring the first-type active period and the second-type active period provided in this application, energy consumption of the network device can be effectively reduced.

Each of the plurality of DTX configurations in this application is used to configure at least one active period. In other words, each of DTX configuration indicates at least one of the following: a quantity of active periods, a start position of an active period, or a duration of the active period. That the plurality of DTX configurations are different may be understood as that information indicated by the plurality of DTX configurations are different, for example, quantities of active periods are different, start positions of active periods are different, or durations of the active periods are different. It should be understood that information indicated by each of DTX configuration may further include a duration of an extended active period, other information, or the like.

Optionally, the plurality of DTX configurations are carried in a same system message for sending.

With reference to the first aspect, in some implementations of the first aspect, receiving the plurality of DTX configurations includes: receiving the first DTX configuration, and receiving the second DTX configuration in the at least one first-type active period of the first DTX configuration.

For example, receiving the second DTX configuration in the at least one first-type active period may be receiving one second DTX configuration in each of some or all of the at least one first-type active period.

In this manner of flexibly configuring the second DTX configuration, turn-off time of the terminal device and turn-off time of the network device may be flexibly adjusted based on a moving speed of the terminal device or another measurement requirement. When second DTX with long sleep time is configured, the terminal device or the network device wakes up for shorter time, continuous sleep time is longer, and an energy saving effect is better.

With reference to the first aspect, in some implementations of the first aspect, the method further includes: determining the first DTX configuration from the plurality of DTX configurations, and receiving first information in the at least one first-type active period of the first DTX configuration, where the first information indicates the second DTX configuration in the plurality of DTX configurations.

For example, when the plurality of DTX configurations each have a corresponding index, the first information may be an index value corresponding to the DTX configuration.

With reference to the foregoing example in which the plurality of DTX configurations are different, it can be learned that the first information may alternatively include parameter information such as the quantity of active periods, the start position of the active period being different, or the duration of the active period. In other words, each information that can be used to distinguish between different DTX configurations may be used as the first information.

Optionally, the method further includes: receiving first indication information, where the first indication information indicates the first DTX configuration in the plurality of DTX configurations; and receiving second indication information, where the second indication information indicates the second DTX configuration in the plurality of DTX configurations.

For descriptions of the first indication information and the second indication information, refer to the descriptions of the first information. Details are not described herein again.

With reference to the first aspect, in some implementations of the first aspect, performing communication in the at least one first-type active period or the at least one second-type active period based on the first DTX configuration and the second DTX configuration includes: receiving the low power wake up signal in a second active period via the low power wake up receiver, where the second active period is any one of the at least one second-type active period; and when receiving the low power wake up signal, waking up the main receiver to receive the downlink data in an extended active period, where a start position of the extended active period is determined based on a moment at which the terminal device receives the low power wake up signal.

It should be understood that the start position of the extended active period may be the moment at which the terminal device receives the low power wake up signal, or may be any moment between the moment at which the terminal device receives the low power wake up signal and a start moment of a next first-type active period. The next first-type active period is a 1^{st} first-type active period after a first active period in which the low power wake up signal is received. The duration of the extended active period may be predefined, or may be configured by the network device for the terminal device. For example, the duration of the extended active period may be 10 milliseconds (millisecond, ms), 20 ms, 40 ms, 80 ms, or the like.

Based on this, the main receiver in the sleep period is woken up by using the low power wake up signal to receive the downlink data in the extended active period, so that a waiting delay of the downlink data can be reduced, and user experience can be improved.

With reference to the first aspect, in some implementations of the first aspect, performing communication in the at least one first-type active period or the at least one second-type active period based on the first DTX configuration and the second DTX configuration includes: receiving the downlink data or sending the uplink data in a first active period via the main receiver, where the first active period is any one of the at least one first-type active period.

According to a second aspect, a communication method is provided. The method may be applied to a network device. For example, the method may be performed by the network device, may be performed by a component (for example, a chip or a chip system) configured in the network device, or may be implemented by a logical module or software that can implement all or some functions of the network device. This is not limited in this application.

For example, the method includes: sending a plurality of DTX configurations to a terminal device, where any two of the plurality of DTX configurations are different, the plurality of DTX configurations include a first DTX configuration and a second DTX configuration, the first DTX configuration is used to configure at least one first-type active period, the at least one first-type active period is configured to be used by the network device to send downlink data or receive uplink data, the second DTX configuration is used to configure at least one second-type active period, the at least one second-type active period is configured to be used by the network device to send a low power wake up signal, and the at least one first-type active period and the at least one second-type active period do not overlap in time domain; and performing communication with the terminal device in the at least one first-type active period or the at least one second-type active period based on the first DTX configuration and the second DTX configuration.

According to this method, the network device configures the at least one first-type active period and the at least one second-type active period, so that the network device can be in a working state in the first-type active period or the second-type active period, and may not be in the working state in a sleep period between the first-type active period and the second-type active period. This reduces energy consumption of the network device. Second, because the at least one first-type active period and the at least one second-type active period do not overlap in time domain, when a moment at which the network device obtains the downlink data is not in the first-type active period, the network device may also send the low power wake up signal in the second-type active period, to wake up a main receiver in a sleep state to receive the downlink data, so that a waiting delay of the downlink data is reduced, and user experience is improved.

With reference to the second aspect, in some implementations of the second aspect, sending the plurality of discontinuous transmission DTX configurations to the terminal device includes: sending the first DTX configuration to the terminal device, and sending the second DTX configuration to the terminal device in the at least one first-type active period.

For example, sending the second DTX configuration in the at least one first-type active period may be sending one second DTX configuration in each of some or all of the at least one first-type active period.

With reference to the second aspect, in some implementations of the second aspect, the method further includes: determining the first DTX configuration from the plurality of DTX configurations, and sending first information to the terminal device in the at least one first-type active period, where the first information indicates the second DTX configuration in the plurality of DTX configurations.

For example, when the plurality of DTX configurations each have a corresponding index, the first information may be an index value corresponding to the DTX configuration.

With reference to the example in which the plurality of DTX configurations are different in the first aspect, it can be learned that the first information may alternatively be parameter information such as a quantity of active periods, a start position of an active period being different, or a duration of the active period. In other words, each information that can be used to distinguish between different DTX configurations may be used as the first information.

Optionally, the method further includes: sending first indication information, where the first indication information indicates the first DTX configuration in the plurality of DTX configurations; and sending second indication information, where the second indication information indicates the second DTX configuration in the plurality of DTX configurations.

For descriptions of the first indication information and the second indication information, refer to the descriptions of the first information. Details are not described herein again.

With reference to the second aspect, in some implementations of the second aspect, performing communication in the at least one first-type active period or the at least one second-type active period based on the first DTX configuration and the second DTX configuration includes: sending the low power wake up signal in a second active period, where the first active period is any one of the at least one second-type active period; and sending the downlink data to the terminal device in an extended active period, where a start position of the extended active period is determined based on sending time of the low power wake up signal, and the downlink data is to-be-sent data obtained in a sleep period that is before the second active period.

For descriptions of the extended active period, refer to the descriptions of the extended active period in the first aspect. Details are not described herein again.

With reference to the second aspect, in some implementations of the second aspect, the method further includes: determining, based on time at which the downlink data is obtained, that a next active period that arrives is the second active period.

For example, when determining that the next active period that arrives is the second active period, the network device sends the low power wake up signal to the terminal device in the second active period. When determining that the next active period that arrives is the first active period, the network device sends the downlink data to the terminal device in the first active period. The first active period is any one of the at least one first-type active period.

With reference to the second aspect, in some implementations of the second aspect, performing communication in the at least one first-type active period or the at least one second active period based on the first DTX configuration and the second DTX configuration includes: receiving the downlink data or sending the uplink data in a first active period via a main receiver, where the first active period is any one of the at least one first-type active period.

With reference to the second aspect, in some implementations of the second aspect, the method further includes: sending the first DTX configuration and the second DTX configuration to a second network device.

With reference to the second aspect, in some implementations of the second aspect, the method further includes: sending a first configuration of a measurement signal to the second network device, where the first configuration includes sending time of the measurement signal.

For example, the first configuration may include a sending position, a sending cycle, and the like of the measurement signal.

Optionally, the method further includes: sending the first DTX configuration and indication information to the second network device, where the indication information indicates a configuration of a measurement signal that is sent in an active period configured by using the first DTX configuration. For example, the configuration of the measurement signal may be a sending position, a sending cycle, or the like of a synchronization signal block (synchronization signal block, SSB).

With reference to the first aspect and the second aspect, in some implementations of the first aspect and the second aspect, the plurality of DTX configurations are carried in a multicast message or a broadcast message.

The plurality of DTX configurations are transmitted in a broadcast or multicast manner, so that DTX configurations received by a plurality of terminal devices that access the network device are the same.

With reference to the first aspect and the second aspect, in some implementations of the first aspect and the second aspect, the second DTX configuration indicates a quantity of second-type active periods and a start position and a duration of each second-type active period.

For example, when one second-type active period is included between two adjacent first active periods, and an interval between two adjacent second-type active periods in a plurality of second-type active periods is the same in time domain, the second DTX configuration may include a duration of a second DTX cycle, a time domain offset of the second-type active period relative to the first-type active period, and a duration of the second-type active period.

The duration of the second DTX cycle may be understood as a duration of a cycle of the second-type active period, and the time domain offset of the second-type active period relative to the first active period may be a time domain offset relative to a start moment of the first-type active period using the start moment of the first-type active period as a start position, or a time domain offset relative to an end moment of the first-type active period using the end moment of the first-type active period as a start position.

With reference to the first aspect and the second aspect, in some implementations of the first aspect and the second aspect, the second DTX configuration indicates at least one of the following: a duration of a first cycle, where the first cycle is a cycle of a second-type active period group; a duration of a second cycle, where the second cycle is a cycle of a second-type active period included in the second-type active period group; a quantity of second-type active periods included in each second-type active period group; a time domain offset of a 1^{st} second-type active period relative to a 1^{st} first-type active period; or a duration of each second-type active period.

The first cycle may also be referred to as a second long DTX cycle, and the second cycle may also be referred to as a second short DTX cycle. The time domain offset of the 1^{st} second-type active period relative to the 1^{st} first-type active period may be understood as a time domain offset of the 1^{st} second-type active period relative to a start position of the first-type active period, or a time domain offset of the 1^{st} second-type active period relative to an end position of the first-type active period.

With reference to the first aspect and the second aspect, in some implementations of the first aspect and the second aspect, the second DTX configuration further includes second information, and the second information indicates that the second DTX configuration is a configuration used for the low power wake up receiver.

With reference to the first aspect and the second aspect, in some implementations of the first aspect and the second aspect, the first DTX configuration indicates a duration of a third cycle and a start position and a duration of a first-type active period, and the third cycle is a cycle of the first-type active period.

With reference to the first aspect and the second aspect, in some implementations of the first aspect and the second aspect, the first DTX configuration further includes third information, and the third information indicates that the first DTX configuration is a configuration used for the main receiver.

According to a third aspect, a communication method is provided. The method may be applied to a network device. For example, the method may be performed by the network device, may be performed by a component (for example, a chip or a chip system) configured in the network device, or may be implemented by a logical module or software that can implement all or some functions of the network device. This is not limited in this application.

For example, the method includes: receiving a first DTX configuration and a second DTX configuration from a first network device, where the first DTX configuration is used to configure at least one first-type active period, the at least one first-type active period is configured to be used by a main receiver of a first terminal device to receive downlink data or send uplink data, the second DTX configuration is used to configure at least one second-type active period, the at least one second-type active period is configured to be used by a low power wake up receiver of the first terminal device to receive a low power wake up signal, and the at least one first-type active period and the at least one second-type active period do not overlap in time domain; and performing communication in at least one third-type active period or at least one fourth-type active period based on the first DTX configuration and the second DTX configuration, where the at least one third-type active period and the at least one fourth-type active period do not overlap in time domain, the at least one third-type active period and the at least one first-type active period do not overlap in time domain, and the at least one fourth-type active period and the at least one second-type active period do not overlap in time domain.

The at least one third-type active period is configured to be used by a main receiver of a second terminal device to receive downlink data or send uplink data. The at least one fourth-type active period is configured to be used by a low power wake up receiver of the second terminal device to receive a low power wake up signal. It should be understood that the second terminal device is a terminal that accesses the second network device, and the first terminal is a terminal that accesses the first network device.

According to this method, the network devices exchange the first DTX configuration and the second DTX configuration, so that the network device can configure at least one active period in a time division multiplexing manner. This helps reduce interference between the network devices.

With reference to the third aspect, in some implementations of the third aspect, the method further includes: receiving a first configuration of a measurement signal from the first network device, where the first configuration includes sending time of the measurement signal.

For example, an SSB is used as an example. When receiving a time-frequency position of the SSB sent by the first network device, the second network device may configure, for the second terminal based on received information, different sending time of the measurement signal. The network devices exchange the configuration of the measurement signal, so that the network device can determine, based on the received configuration of the measurement signal, a configuration of the measurement signal at a local end, to effectively avoid invalid measurement on some cells.

According to a fourth aspect, a communication apparatus is provided, configured to perform the method in any one of the possible implementations of any one of the foregoing aspects. Specifically, the apparatus includes modules configured to perform the method in any one of the possible implementations of any one of the foregoing aspects.

In a design, the communication apparatus may include modules that are in one-to-one correspondence with the methods/operations/steps/actions described in any one of the foregoing aspects, and the modules may be implemented by a hardware circuit, software, or a combination of the hardware circuit and software.

In another design, the communication apparatus is a communication chip. The communication chip may include an input circuit or interface configured to send information or data, and an output circuit or interface configured to receive information or data.

In another design, the communication apparatus is a terminal device. The terminal device may include a transmitter configured to send information or data, a main receiver configured to receive information or data, and a low power wake up receiver configured to receive a low power wake up signal.

In another design, the communication apparatus is a network device. The network device may include a transmitter configured to send information or data and a receiver configured to receive information or data.

In another design, the communication apparatus is configured to perform the method in any one of the possible implementations of any one of the foregoing aspects, and the communication apparatus may be configured in a terminal device or a network device.

According to a fifth aspect, a communication apparatus is provided, including a processor. The processor is configured to invoke a computer program from a memory and run the computer program, to enable the communication apparatus to perform the method in any one of the possible implementations of any one of the foregoing aspects.

Optionally, the communication apparatus further includes the memory. The memory may be configured to store instructions and data. The memory is coupled to the processor. When the processor executes the instructions stored in the memory, the method described in the foregoing aspects may be implemented.

Optionally, the communication device further includes a transmitter (transmitter machine) and a receiver (receiver machine). The transmitter and the receiver may be separately disposed, or may be integrated together, and are referred to as a transceiver (transceiver machine). Alternatively, the communication device further includes a main receiver and a low power wake up receiver. The main receiver is a module that integrates a transmitter and a receiver, and has functions of sending data and receiving data. The low power wake up receiver is a module that integrates a receiver and a wake up main receiver, and has functions of receiving data and waking up a main module.

According to a sixth aspect, a computer program product is provided. The computer program product includes a computer program (which may also be referred to as code or instructions). When the computer program is run, a computer is enabled to perform the method in any one of the possible implementations of any one of the foregoing aspects.

According to a seventh aspect, a computer-readable storage medium is provided. The computer-readable storage medium stores a computer program (which may also be referred to as code or instructions). When the computer program is run on a computer, the computer is enabled to perform the method in any one of the possible implementations of any one of the foregoing aspects.

According to an eighth aspect, this application provides a chip system. The chip system includes at least one processor, configured to support implementation of a function in any one of the foregoing aspects, for example, receiving or processing data in the foregoing method.

In a possible design, the chip system further includes a memory. The memory is configured to store program instructions and data, and the memory is located inside or outside the processor.

Optionally, the chip system may include a chip, or may include a chip and another discrete component.

According to a ninth aspect, a communication system is provided, including a terminal device and a network device. The terminal device is configured to implement the method in any one of the possible implementations of the first aspect, and the network device is configured to implement the method in any one of the possible implementations of the second aspect or the third aspect.

In a possible design, the communication system may further include another device that interacts with the terminal device and/or the network device in solutions provided in this application.

### BRIEF DESCRIPTION OF DRAWINGS

FIG. 1 is a diagram of a communication system applicable to a method according to an embodiment of this application;
FIG. 2 is a diagram of DRX cycles;
FIG. 3 is a diagram of DRX and DTX configuration manners;
FIG. 4 is a diagram of a structure of a terminal device;
FIG. 5 is a diagram of a coverage area of an LP-WUS;
FIG. 6 is a schematic flowchart of a communication method according to an embodiment of this application;
FIG. 7 is a diagram of positions of first-type active periods and second-type active periods in time domain according to an embodiment of this application;
FIG. 8 is another diagram of positions of another type of first-type active periods and another type of second-type active periods in time domain according to an embodiment of this application;
FIG. 9 is a diagram of a relationship between arrival moments and sending moments of downlink data according to an embodiment of this application;
FIG. 10 is a diagram of a position relationship between extended active periods and first-type active periods in time domain according to an embodiment of this application;
FIG. 11 is a diagram of distribution of second-type active periods in time domain according to an embodiment of this application;
FIG. 12 is a block diagram of a communication apparatus according to an embodiment of this application; and
FIG. 13 is a block diagram of another communication apparatus according to an embodiment of this application.

### DESCRIPTION OF EMBODIMENTS

The following describes the technical solutions of this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G mobile communication system, a new radio (new radio, NR) system or another evolved communication system, a next generation mobile communication system of a 5G communication system, a 6th generation (6th generation, 6G) communication system, or a future communication system.

The technical solutions provided in this application may be further applied to a non-terrestrial communication network (non-terrestrial network, NTN) communication system like a satellite communication system. The NTN communication system may be integrated with a wireless communication system.

The technical solutions provided in this application may be further applied to a standalone (standalone, SA) scenario and a dual connectivity (dual connectivity, DC) scenario. In the SA scenario, a terminal device is connected to a single access network device, and the access network device connected to the terminal device and a core network connected to the access network device are of a same standard. For example, the core (Core) network is a 5G Core, the access network device corresponds to a 5G access network device, and the 5G core network is directly connected to the 5G Core. Alternatively, the core network is a 6G Core, the access network device is a 6G access network device, and the 6G access network device is directly connected to the 6G Core. In the DC scenario, a terminal device is connected to access network devices of different standard s or a same standard. For example, a core network is a 5G Core, and the terminal device is connected to both a 5G access network device and a 6G access network device. The 5G access network device serves as a primary station, and the 6G access network device serves as a secondary station. For another example, a core network is a 6G Core, and the terminal device is connected to both a 6G access network device and a 5G access network device. The 6G access network device serves as a primary station, and the 5G access network device serves as a secondary station. For another example, a core network is a 6G Core, and the terminal device is connected to two 6G access network devices both. In other words, both a primary station and a secondary station are 6G access network devices.

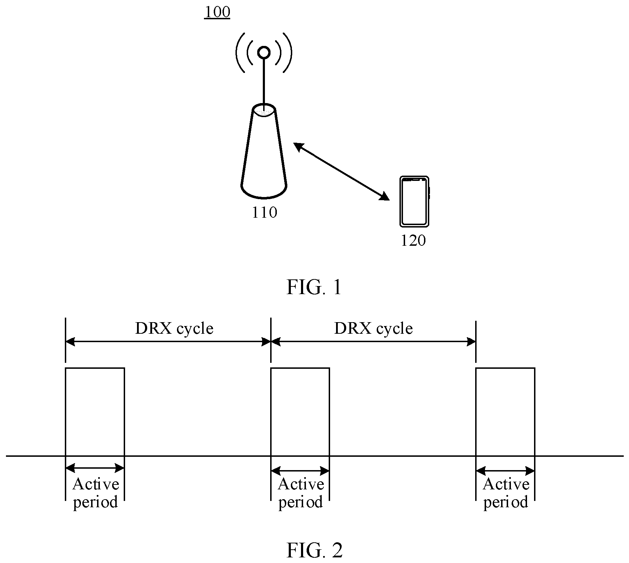

For ease of understanding of embodiments of this application, a communication system applicable to embodiments of this application is first described in detail with reference to FIG. 1.

FIG. 1 is a diagram of a communication system 100 applicable to a method according to an embodiment of this application. As shown in FIG. 1, the communication system 100 includes at least two communication devices, for example, a network device 110 and a terminal device 120. The network device 110 and the terminal device 120 may perform data communication through a wireless connection. Specifically, the network device 110 may send downlink data to the terminal device 120, and the terminal device 120 may also send uplink data to the network device 110.

In embodiments of this application, the terminal device (for example, the terminal device 120 shown in FIG. 1) is a device with a wireless transceiver function, and may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or a vehicle-mounted device with a wireless connection function. Currently, some examples of the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a sensor terminal, a sensing terminal, a device integrating communication and sensing, a cellular phone, a cordless phone, a session initiation protocol (session initiation protocol, SIP) phone, a wireless local loop (wireless local loop, WLL) station, a personal digital assistant (personal digital assistant, PDA), a handheld terminal with a wireless communication function, a computing device or another processing device connected to a wireless modem, a vehicle-mounted device, an uncrewed aerial vehicle, a terminal in a 5G network, a terminal in a future evolved public land mobile communication network (public land mobile network, PLMN), and the like. A specific technology, a device form, and a name of the terminal are not limited in embodiments of this application. However, it should be noted that the terminal device in embodiments of this application includes a main receiver and a low power receiver.

The network device in this application may be a device (for example, the network device 110 shown in FIG. 1) configured to perform communication with the terminal, or may be a device that enables the terminal to access a wireless network. The network device may be a node in a radio access network. The network device may be a base station (base station), an evolved NodeB (evolved NodeB, eNodeB), a transmission reception point (transmission reception point, TRP), a home base station (for example, a home evolved NodeB or a home NodeB, HNB), a wireless fidelity (wireless fidelity, Wi-Fi) access point (access point, AP), a mobile switching center, a next generation NodeB (next generation NodeB, gNB) in a 5G mobile communication system, a next generation base station in a 6G mobile communication system, a base station in a future mobile communication system, or the like. The network device may alternatively be a module or a unit that completes some functions of a base station, for example, may be a central unit (central unit, CU), a distributed unit (distributed unit, DU), a remote radio unit (remote radio unit, RRU), or a baseband unit (baseband unit, BBU). The network device may alternatively be a device that undertakes a function of a base station and that is in a device to device (device to device, D2D) communication system, uncrewed aerial vehicle communication, a vehicle to vehicle (vehicle to vehicle, V2V) communication system, a machine to machine (machine to machine, M2M) communication system, and an internet of things (internet of things, IoT) communication system. The network device may alternatively be a network device in an NTN, in other words, the network device may be deployed on a high altitude platform or a satellite. The network device may be a macro base station, may be a micro base station or an indoor base station, or may be a relay node, a donor node, or the like. Certainly, the network device may alternatively be a node in a core network. A specific technology, a device form, and a name used by the network device are not limited in embodiments of this application.

In embodiments of this application, a function of the network device may alternatively be performed by a module (for example, a chip) in the network device, or may be performed by a control subsystem that includes the function of the network device. The control subsystem including the function of the network device herein may be a control center in application scenarios of the terminal, such as a smart grid, industrial control, intelligent transportation, a smart city, and an integrated sensing and communication system. A function of the terminal may be performed by a module (for example, a chip or a modem) in the terminal, or may be performed by an apparatus including the function of the terminal.

The network device and the terminal device in this application may be deployed on land, including an indoor device, an outdoor device, a handheld device, or a vehicle-mounted device, may be deployed on water (such as a ship), or may be deployed in air (for example, on an airplane, a balloon, or a satellite). Application scenarios of the network device and the terminal are not limited in this application.

It should be understood that FIG. 1 is merely a simplified diagram for ease of understanding. The communication system 100 may further include another device, which is not shown in FIG. 1.

For example, when data transmission is performed between the network device 110 and the terminal device 120 shown in FIG. 1, the terminal device does not always exchange valid information with the network device, in other words, does not always perform an upload or download service. In other words, there is no data exchange between the terminal device and the network device most of the time. When there is no data exchange, the terminal device still continuously monitors a physical downlink control channel (physical downlink control channel, PDCCH). This causes excessively high energy consumption of the terminal device. Therefore, in some embodiments, a solution that can reduce energy consumption of the terminal device while ensuring effective data transmission is designed. The solution is specifically as follows: For a terminal device in a connected state, when the network device needs to send service data to the terminal device, the terminal device monitors a PDCCH. Otherwise, the terminal device turns off a receiver, and no longer continuously monitors the PDCCH, to reduce power consumption of the terminal device and prolong standby time of the terminal device. In other words, when in the connected state, the terminal device may monitor the PDCCH for a period of time, and does not monitor the PDCHH for a period of time. This working manner of the terminal device may be referred to as DRX.

FIG. 2 shows DRX cycles. As shown in FIG. 2, a period of time identified as an "active period" in a DRX cycle (cycle) is time in which a terminal device monitors a PDCCH, and in this period of time, the terminal device is in a wake-up state; and a period of time not identified as an "active period" is sleep time of the terminal device, to be specific, time in which the terminal device enters a sleep state and does not monitor the PDCCH to reduce energy consumption, which belongs to a "sleep period". In this way, the terminal device may not need to always monitor the PDCCH, and the energy consumption of the terminal device is significantly reduced.

Similarly, when data transmission is performed between the network device 110 and the terminal device 120, there is also the foregoing problem of excessively high energy consumption for the network device. Therefore, in some embodiments, to reduce energy consumption on a network device side, it is proposed to introduce a similar mechanism (which may be referred to as DTX) on the network device side, so that the network device can also periodically include an active period and a sleep period. In this way, energy consumption of the network device can be reduced.

When the foregoing mechanisms are introduced on both a terminal side and a network side, the network device may align DRX configurations of all terminal devices, so that active periods of DRX and DTX appear at same time in time domain.

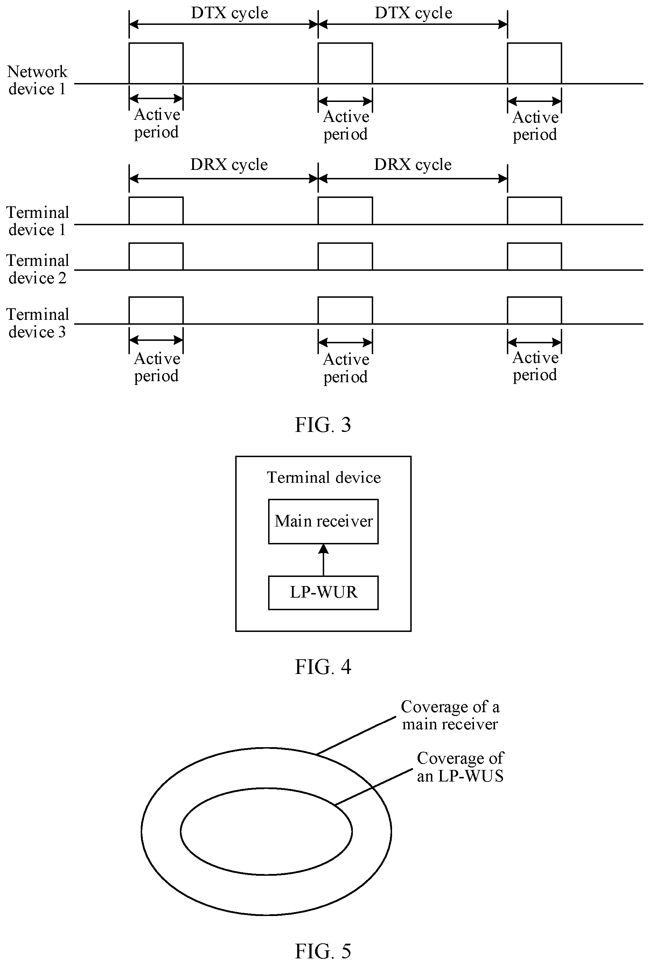

FIG. 3 shows DRX and DTX configuration manners. As shown in FIG. 3, DRX configurations of a terminal device 1, a terminal device 2, and a terminal device 3 are the same, and are the same as a DTX configuration of a network device. To be specific, active periods of the three terminal devices are the same, and correspond to an active period of the network device; and sleep periods of the three terminal devices are the same, and correspond to a sleep period of the network device. All the terminal devices herein may be understood as all terminal devices that access the network device. For example, the terminal device 1, the terminal device 2, and the terminal device 3 in FIG. 3 are all terminal devices that access the network device 1.

According to the foregoing solution, although energy consumption on the terminal side and the network side can be reduced, the following problem exists: When the network device and the terminal device are in a sleep period, if downlink data arrives, the network device needs to buffer the downlink data in storage space, and sends the downlink data to the terminal device when the network device and the terminal device are in an active period. Consequently, waiting time of the downlink data is excessively long, and user experience is affected.

To reduce a waiting duration of the downlink data, in some embodiments, a manner of shortening a DRX cycle or prolonging a duration of a DRX active period is proposed to reduce the waiting duration of the downlink data. However, this significantly shortens a sleep period of the terminal device, and increases the energy consumption on the terminal device side. In some other embodiments, a receiver architecture shown in FIG. 4 is proposed for the terminal device.

As shown in FIG. 4, the terminal device includes a main receiver (main radio) and a low power wake up receiver (low power wake up receiver, LP-WUR). The main receiver may send or receive data, and may enter a deep sleep mode, a light sleep mode, or a sleep mode. In this case, the terminal device may receive a low power wake up signal (low power wake up signal, LP-WUS) by using the LP-WUR, to wake up the main receiver in the sleep mode, so that the terminal device performs uplink and downlink data packet transmission with a network device via the main receiver. However, because an architecture and signal processing of the LP-WUR are simple, a coverage area of the LP-WUS is smaller than that of a signal/channel on the main receiver, and a case in which the LP-WUS cannot wake up the main receiver exists. Coverage areas of the two receivers are shown in FIG. 5. Therefore, the network device may need to repeatedly send an LP-WUS to the terminal device, to increase a coverage distance of the LP-WUS, so that the LP-WUR can successfully receive the LP-WUS to wake up the main receiver. When a plurality of terminal devices that support an LP-WUS access the network device, the network device needs to repeatedly send an LP-WUS to each terminal device. If a sending moment of the LP-WUS for each terminal device is different, the network device is always in a working state, and energy consumption on a network side is increased. In other words, according to the solution in which the LP-WUR is added for the terminal device, although a transmission delay of downlink data can be reduced, energy consumption of the network device is increased.

In view of this, embodiments of this application provide a communication method. A network device configures at least one first-type active period and at least one second-type active period, so that the network device can be in a working state in the first-type active period or the second-type active period, and may not need to work in a sleep period outside the first-type active period and the second-type active period. This reduces energy consumption of the network device. In addition, because the at least one first-type active period and the at least one second-type active period that are configured by the network device do not overlap in time domain, when a moment at which the network device obtains downlink data is not in the first-type active period, the network device may also send a low power wake up signal in the second-type active period, to wake up a main receiver of a terminal device to receive the downlink data, so that a waiting delay of the downlink data is reduced, and user experience is improved.

Before the communication method provided in this application is described, the following descriptions are first provided.

First, in this application, "indication" may include a direct indication and an indirect indication, or may include an explicit indication and an implicit indication. Information indicated by specific information is referred to as to-be-indicated information. In a specific implementation process, the to-be-indicated information may be indicated in many manners. For example, without limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of information that is pre-agreed on (for example, stipulated in a protocol), to reduce indication overheads to some extent.

Second, in embodiments shown in this specification, terms and English abbreviations such as an LP-WUS, an active period, and DTX are all examples provided for ease of description, and should not constitute any limitation on this application. This application does not exclude a possibility of defining another term that can implement a same or similar function in an existing or a future protocol.

Third, in embodiments shown below, "predefinition" may be implemented by prestoring corresponding code or a corresponding table in a device (for example, including a terminal device and a network device), or may be implemented in another manner that may indicate related information. A specific implementation thereof is not limited in this application.

Fourth, in embodiments shown below, the term like "example" or "for example" represents giving an example, an illustration, or a description. Any embodiment or design scheme described as "example" or "for example" in this application should not be explained as being more preferred or having more advantages than another embodiment or design scheme. Exactly, use of the word like "example" or "for example" is intended to present a related concept in a specific manner.

Fifth, "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof means any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

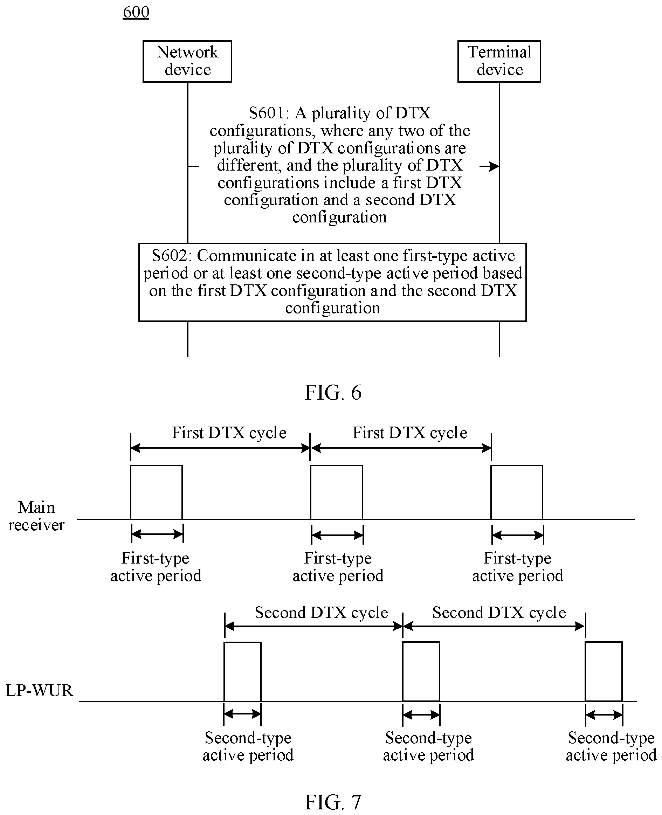

The following describes in detail the communication method provided in embodiments of this application with reference to FIG. 6 to FIG. 11. The communication method may be applied to the communication system 100 shown in FIG. 1. However, embodiments of this application are not limited thereto.

In a flowchart shown in FIG. 6, the method is shown from a perspective of interaction between a terminal device and a network device. However, an execution body of the method is not limited in this application. For example, the terminal device in FIG. 6 may alternatively be a chip, a chip system, or a processor that supports the terminal device in implementing the method, or may be a logical module or software that can implement all or some functions of the terminal device. The network device in FIG. 6 may alternatively be a chip, a chip system, or a processor that supports the network device in implementing the method, or may be a logical module or software that can implement all or some functions of the network device. It should be understood that the terminal device in embodiments of this application includes a main receiver and a low power wake up receiver.

FIG. 6 is a diagram of a communication method 600 according to an embodiment of this application. As shown in FIG. 6, the method 600 includes S601 and S602. The following describes in detail the steps shown in FIG. 6.

S601: A network device sends a plurality of DTX configurations to a terminal device, where any two of the plurality of DTX configurations are different, and the plurality of DTX configurations include a first DTX configuration and a second DTX configuration. Correspondingly, the terminal device receives the plurality of DTX configurations.

The first DTX configuration is used to configure at least one first-type active period, the second DTX configuration is used to configure at least one second-type active period, and the at least one first-type active period and the at least one second-type active period do not overlap in time domain. For the network device, the at least one first-type active period is configured to be used by the network device to send downlink data or receive uplink data, and the at least one second-type active period is configured to be used by the network device to send a low power wake up signal. For the terminal device, the at least one first-type active period is configured to be used by a main receiver to receive the downlink data or send the uplink data, the at least one second-type active period is configured to be used by a low power wake up receiver to receive the low power wake up signal, and the low power wake up signal is used to wake up the main receiver of the terminal device to receive the downlink data.

Each of the plurality of DTX configurations may be used to configure at least one active period. In other words, information indicated by each of DTX configuration may include a quantity of active periods, a start position of an active period, or a duration of the active period. Any two of the plurality of DTX configurations indicate different information. For example, different DTX configurations indicate different quantities of active periods, different durations of active periods, or different start positions of the active periods. However, it should be understood that the information indicated by each of DTX configuration may further include a duration of an extended active period, other information, or the like.

That the at least one first-type active period and the at least one second-type active period do not overlap in time domain may be understood as that one or more second-type active periods are included between two adjacent first-type active periods, in other words, an active period of the low power wake up receiver is in a sleep period of the main receiver, in other words, the second DTX configuration in this embodiment of this application is determined based on the first DTX configuration.

For example, when a quantity of the at least one first-type active period is more than one, an interval between every two adjacent first-type active periods in the plurality of first-type active periods may be the same or different in time domain. When one second-type active period is included between every two adjacent first-type active periods, an interval between every two adjacent second-type active periods in a plurality of second-type active periods may be the same or different in time domain. When one second-type active period group is included between every two adjacent first-type active periods, and each group includes a plurality of second-type active periods, an interval between every two adjacent second-type active period groups may be the same or may be different in time domain. When the interval between every two adjacent second-type active period groups in time domain is the same as the interval between every two adjacent second-type active periods in time domain, the plurality of second-type active periods being included between every two adjacent first-type active periods can enable the terminal device to more frequently monitor the low power wake up signal. Therefore, when the downlink data arrives, the terminal device can be woken up in a more timely manner, so that a data transmission delay is reduced.

It should be understood that, when the quantity of the at least one first-type active period is more than one, durations of the plurality of first-type active periods may be different from each other, may be partially the same and partially different, or may be completely the same. Similarly, when a quantity of the at least one second-type active period is more than one, durations of the plurality of second-type active periods may be different from each other, may be partially the same and partially different, or may be completely the same.

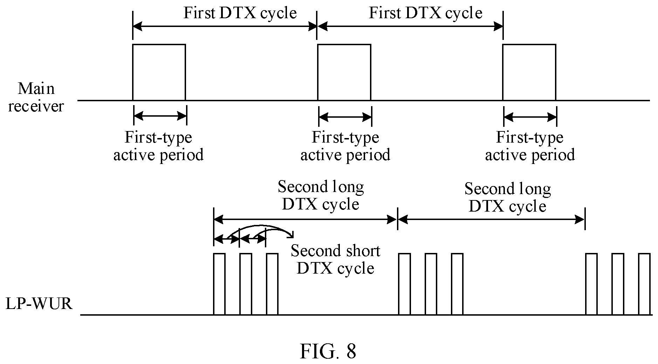

The following describes a position relationship between the first-type active period and the second-type active period in time domain with reference to FIG. 7 and FIG. 8 by using an example in which the first-type active period and the second-type active period periodically appear.

FIG. 7 is a diagram of positions of one type of first-type active periods and one type of second-type active periods in time domain according to an embodiment of this application. As shown in FIG. 7, a first-type active period corresponding to a main receiver periodically appears, and a cycle of the first-type active period is referred to as a first DTX cycle; and a second-type active period corresponding to a low power wake up receiver periodically appears, and a cycle of the second-type active period is referred to as a second DTX cycle. In addition, the second-type active period is in a sleep period included in the first DTX cycle, and a sleep period of each first DTX cycle corresponds to one second-type active period.

FIG. 8 is a diagram of positions of another type of first-type active periods and another type of second-type active periods in time domain according to an embodiment of this application. As shown in FIG. 8, a first-type active period corresponding to a main receiver periodically appears, and a cycle of the first-type active period is referred to as a first DTX cycle. Each first DTX cycle includes a sleep period, and each sleep period includes a plurality of second active periods corresponding to a low power wake up receiver. A plurality of second-type active periods in a same sleep period are periodically distributed, and a duration of an interval between every two adjacent second-type active periods in the plurality of second-type active periods is a cycle of the plurality of second-type active periods, and may be referred to as a second short DTX cycle. The plurality of second-type active periods in the same sleep period are denoted as a group of second-type active periods. A plurality of groups of second-type active periods in different sleep periods are also periodically distributed, and in the plurality of groups of second-type active periods in the different sleep periods, a duration of an interval between every two adjacent groups of second-type active periods is a cycle of the plurality of groups of second-type active periods, and may be referred to as a second long DTX cycle. It may be understood that a second long DTX cycle may include a plurality of second short DTX cycles. For example, FIG. 8 shows three groups of second-type active periods. A duration of an interval between every two adjacent groups of second-type active periods is a second long DTX cycle, and a duration of an interval between every two adjacent second-type active periods in each group of second-type active periods is a second short DTX cycle.

It should be understood that, when the sleep period included in each first DTX cycle shown in FIG. 8 includes one second-type active period, a duration of an interval between every two adjacent second-type active periods is a cycle of the second-type active period, and may be referred to as a second DTX cycle.

The DTX configuration in this embodiment of this application may also be referred to as a DRX configuration, or may have another name. Within specific time, a communication device (for example, the network device or the terminal device) has an active period and a sleep period. In the active period, communication devices may communicate with each other, and in the sleep period, the communication devices do not communicate with each other. The communication herein may be understood as that the network device and the terminal device may exchange information.

S602: The network device and the terminal device communicate in the at least one first-type active period or the at least one second-type active period based on the first DTX configuration and the second DTX configuration.

It should be understood that there is a sleep period between the first-type active period and the second-type active period. The network device does not perform communication with the terminal device in the sleep period.

In this embodiment of this application, the at least one first-type active period and the at least one second-type active period are configured, so that the network device can be in a working state in the first-type active period or the second-type active period, and does not need to be always in the working state. This reduces energy consumption of the network device. In addition, because the at least one first-type active period and the at least one second-type active period do not overlap in time domain, when a moment at which the network device obtains the downlink data is not in the first-type active period, the network device may also send the low power wake up signal in the second-type active period, to wake up the main receiver of the terminal device to receive the downlink data, so that a waiting delay of the downlink data is reduced.

In an optional embodiment, the method 600 further includes: The network device determines, based on time at which the downlink data is obtained, that a next active period that arrives is the first-type active period or the second-type active period.

For example, when it is determined that the next active period that arrives is the first-type active period, S602 may include: The network device sends the downlink data to the terminal device in the first active period. Correspondingly, the terminal device receives the downlink data in the first active period via the main receiver. Alternatively, the terminal device sends the uplink data to the network device in the first active period via the main receiver. Correspondingly, the network device receives the uplink data from the terminal device in the first active period. The first active period is any one of the at least one first-type active period.

For example, when it is determined that the next active period that arrives is the second-type active period, S602 may include: The network device sends the low power wake up signal to the terminal device in the second active period, and sends the downlink data to the terminal device in the extended active period. Correspondingly, the terminal device receives the low power wake up signal in the second active period via the low power wake up receiver, and when receiving the low power wake up signal, wakes up the main receiver to receive the downlink data in the extended active period. The second active period is any one of the at least one second-type active period.

When the network device sends the downlink data to the terminal device in the extended active period, a start position of the extended active period may be determined based on sending time of the low power wake up signal. The start position of the extended active period may be a moment at which the network device sends the low power wake up signal. Alternatively, the start position of the extended active period may be any moment before a moment at which the network device sends the low power wake up signal and a start moment of a next first-type active period. The next first-type active period is a 1^{st} first-type active period after the second active period in which the low power wake up signal is sent.

When the main receiver of the terminal device receives the downlink data in the extended active period, a start position of the extended active period may be determined based on a moment at which the terminal device receives the low power wake up signal. The start position of the extended active period may be a moment at which the low power wake up receiver of the terminal device receives the low power wake up signal. Alternatively, the start position of the extended active period may be any moment before a moment at which the low power wake up receiver receives the low power wake up signal and a start moment of a next first-type active period. The next first-type active period is a 1^{st} first-type active period after the second active period in which the low power wake up signal is received.

It should be understood that the duration of the extended active period may be predefined, or may be configured by the network device. For example, the network device may send, in a system message, a DTX configuration including indication information of the duration of the extended active period.

It should be noted that, if the network device obtains the downlink data in the first active period, the network device may directly send the downlink data to the terminal device in the first active period. Correspondingly, the main receiver of the terminal device receives the downlink data in the first active period. If the network device obtains the downlink data in the second active period, the network device may directly send the low power wake up signal to the terminal device in the second active period, and send the downlink data to the terminal device in the extended active period. Correspondingly, the main receiver of the terminal device receives the low power wake up signal in the second active period, and receives the downlink data in the extended active period.

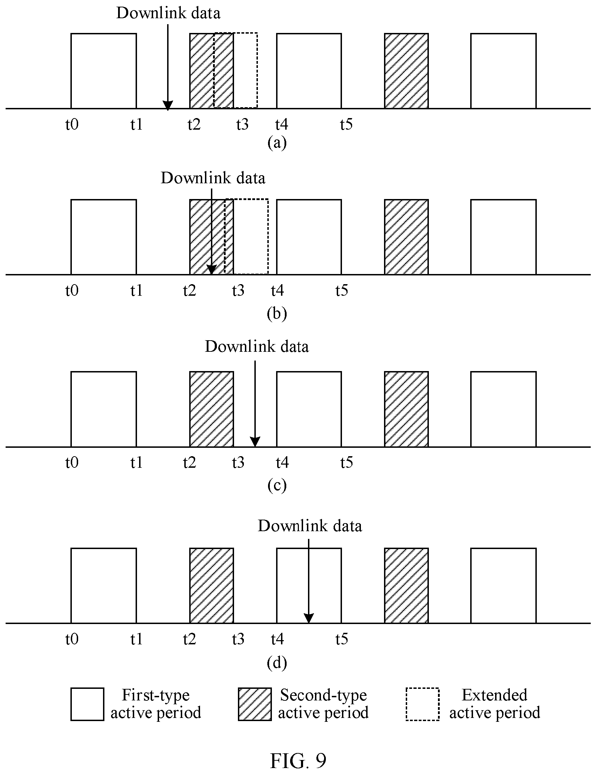

The following describes a relationship between arrival moments and sending moments of the downlink data with reference to FIG. 9. As shown in (a) in FIG. 9, if a network device obtains downlink data between a moment t1 and a moment t2, the network device may send a low power wake up signal to a terminal device in a second-type active period that is from the moment t2 to a moment t3, and send the downlink data to the terminal device in an extended active period, without a need of waiting for arrival of a first-type active period that is from a moment t4 to a moment t5 to send the downlink data, so that a data transmission delay is greatly reduced. As shown in (b) in FIG. 9, if a network device obtains downlink data between a moment t2 and a moment t3, the network device may immediately send a low power wake up signal to a terminal device when the downlink data is obtained, and send the downlink data to the terminal device in an extended active period, without a need of waiting for arrival of a first-type active period that is from a moment t4 to a moment t5 to send the downlink data, so that a data transmission delay is reduced. As shown in (c) in FIG. 9, if a network device obtains downlink data between a moment t3 and a moment t4, the network device sends the downlink data in a first-type active period that is from the moment t4 to a moment t5. As shown in (d) in FIG. 9, if a network device obtains downlink data in a first-type active period that is from a moment t4 to a moment t5, the network device may immediately send the downlink data to a terminal device when the downlink data is obtained. A start moment of the extended active period may be a moment at which the network device sends (or the terminal device receives) the low power wake up signal, or any moment between the moment at which the network device sends (or the terminal device receives) the low power wake up signal and the moment t4.

In this embodiment of this application, extended activation may be classified into two types based on a trigger condition of the extended active period. An extended active period triggered by using a low power wake up signal may be referred to as a first-type extended active period, namely, the extended active period shown in the foregoing embodiment. An extended active period triggered by using a PDCCH may be referred to as a second-type extended active period, namely, an extended active period triggered when the main receiver of the terminal device detects the PDCCH in the first-type active period. Therefore, the second-type extended active period and the first-type active period may overlap or be adjacent in time domain. It should be understood that a duration of the second-type extended active period may be predefined, or may be configured by the network device. For example, the network device may send, in a system message, a DTX configuration including indication information of the duration of the second extended active period.

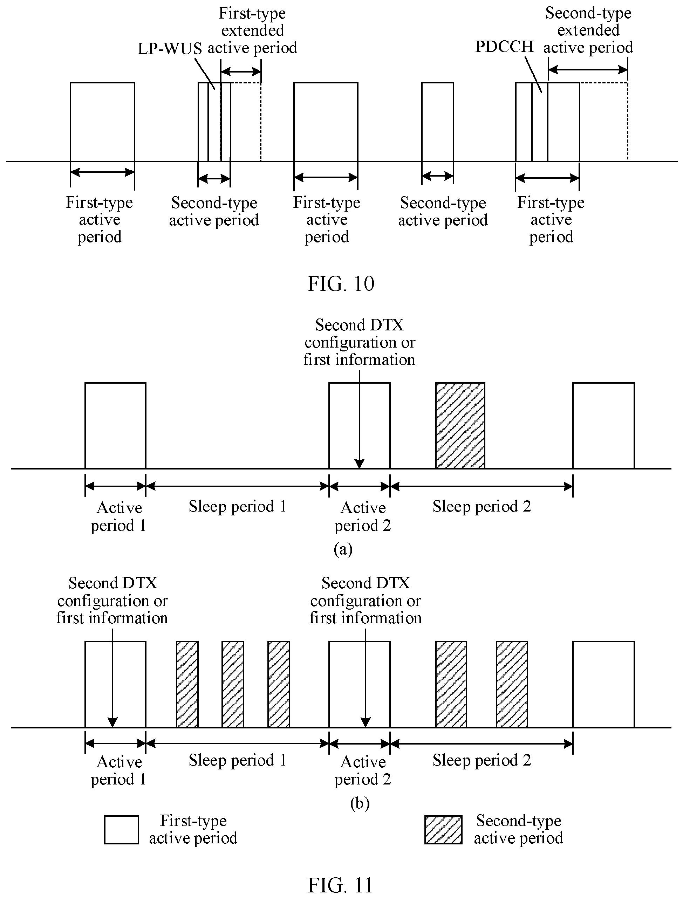

FIG. 10 is a diagram of a position relationship between extended active periods and first-type active periods in time domain according to an embodiment of this application. As shown in FIG. 10, there is a sleep period between a first-type active period and a second-type active period. When receiving a low power wake up signal in a second-type active period, a terminal device triggers a first-type extended active period. A start position of the first-type extended active period may be a moment at which the low power wake up signal is received, and a duration of the first-type extended active period may be a preset duration. When receiving a PDCCH in a first-type active period, the terminal device triggers a second-type extended active period. A start position of the second-type extended active period may be a moment at which the PDCCH is received, and a duration of the second-type extended active period may be a preset duration.

In an optional embodiment, the plurality of DTX configurations are carried in a multicast message or a broadcast message.

For example, the plurality of DTX configurations may be carried in a system message, or carried in radio resource control (radio resource control, RRC) signaling.

Optionally, the network device may alternatively send, in a unicast manner, the plurality of DTX configurations to all or some terminal devices that access the network device.

In an optional embodiment, that the network device sends the plurality of DTX configurations to the terminal device includes: The network device sends the first DTX configuration to the terminal device. The network device sends the second DTX configuration to the terminal device in the at least one first-type active period. Correspondingly, that the terminal device receives the plurality of discontinuous transmission DTX configurations includes: The terminal device receives the first DTX configuration. The terminal device receives the second DTX configuration in the at least one first-type active period.

Optionally, the network device may include the second DTX configuration in downlink control information (downlink control information, DCI) or other signaling in the first-type active period.

For example, the network device may send one second DTX configuration in each of a plurality of active periods in the at least one first-type active period, and the plurality of sent second DTX configurations are different from each other. Correspondingly, the terminal device receives one second DTX configuration in the plurality of active periods in the at least one first-type active period, and configures, in a sleep period between an active period 1 in which a second DTX configuration is received and an active period 2 in which a next second DTX configuration is received, the at least one second-type active period by using the second DTX configuration received in the active period 1; or the terminal device may configure, by using the received second DTX configuration, the at least one second-type active period in a next sleep period of the active period 1 in which the second DTX configuration is received. Both the active period 1 and the active period 2 are first-type active periods, and no second DTX configuration is received between the active period 1 and the active period 2.

For example, the network device may send one second DTX configuration in any one of the at least one first-type active period. Correspondingly, the terminal device receives the second DTX configuration, and may configure, by using the second DTX configuration, the at least one second-type active period in a next sleep period after the second DTX configuration is received.

In an optional embodiment, the method 600 further includes: The network device sends first indication information to the terminal device, where the first indication information indicates the first DTX configuration in the plurality of DTX configurations. The network device sends second indication information to the terminal device, where the second indication information indicates the second DTX configuration in the plurality of DTX configurations. Correspondingly, the terminal device receives the first indication information, and determines the first DTX configuration from the plurality of DTX configurations based on the first indication information. The terminal device receives the second indication information, and determines the second DTX configuration from the plurality of DTX configurations based on the second indication information.

It should be understood that the first indication information and the second indication information may be sent in a broadcast or multicast manner. In this way, first DTX configurations determined by the terminal devices that access the network device may be the same, and second DTX configurations determined by the terminal devices that access the network device may be the same.

In an optional embodiment, the method 600 further includes: The network device determines the first DTX configuration from the plurality of DTX configurations, and sends first information to the terminal device in the at least one first-type active period, where the first information indicates the second DTX configuration in the plurality of DTX configurations. Correspondingly, the terminal device determines the first DTX configuration from the plurality of DTX configurations, and the terminal device receives the first information in the at least one first-type active period, where the first information indicates the second DTX configuration in the plurality of DTX configurations.

It should be understood that the first information may be carried in a media access control (media access control, MAC) control element (control element, CE) (denoted as a MAC CE) or DCI.

For example, the first information may be parameter information such as a duration of an active period or a start position of the active period, used to distinguish between different DTX configurations. When each of the plurality of DTX configurations has a corresponding index value, the first information may further include an index value.

For example, the terminal device may determine the first DTX configuration from the plurality of DTX configurations based on information that is from the network device and that indicates the first DTX configuration. The information that indicates the first DTX configuration may be sent by the network device to the terminal device after the network device determines the first DTX configuration.

It should be noted that, in a scenario in which second DTX is dynamically or semi-statically configured, for the plurality of second DTX configurations, that the second DTX configurations are used to configure the low power wake up receiver may not need to be indicated.

In this embodiment of this application, for a process in which the terminal device configures the at least one second-type active period based on the second DTX configuration or the first information received in the first-type active period, refer to FIG. 11. As shown in (a) in FIG. 11, if a terminal device receives no second DTX configuration or first information in an active period 1, the terminal device configures no second-type active period in a next sleep period (referred to as a sleep period 1) of the active period 1. If the terminal device receives the second DTX configuration or the first information in an active period 2, the terminal device configures one second-type active period in a next sleep period (referred to as a sleep period 2) of the active period 2 based on the received second DTX configuration or the received first information. As shown in (b) in FIG. 11, if a terminal device receives one second DTX configuration or first information in an active period 1, the terminal device configures three second-type active periods in a sleep period 1 based on the received DTX configuration or the received first information. If the terminal device also receives one second DTX configuration or first information in an active period 2, the terminal device configures two second-type active periods in a sleep period 2 based on the received second DTX configuration or first information.

In an optional embodiment, the second DTX configuration indicates a quantity of second-type active periods and a start position and a duration of each second-type active period.

For example, when one second-type active period is included between every two adjacent first active periods, and the interval between every two adjacent second-type active periods in the plurality of second-type active periods is the same in time domain, the second DTX configuration indicates a duration of a first cycle, a quantity of second-type active periods included in the first cycle, a time domain offset of a 1^{st} second-type active period relative to a 1^{st} first active period, and the duration of the second-type active period.

The duration of the first cycle is a duration of a cycle of the second-type active period. The time domain offset of the 1^{st} second-type active period relative to the 1^{st} first active period is a time domain offset of a start position of the 1^{st} second-type active period relative to a start moment of the 1^{st} first-type active period, or a time domain offset of the start position of the 1^{st} second-type active period relative to an end moment of the 1^{st} first-type active period. However, it should be noted that, because the first-type active period may have an extended active period, when the end moment of the first-type active period is used as the start position to determine the time domain offset, whether the end moment of the first-type active period is an end moment of an unextended first-type active period or an end moment of an extended first-type active period may be pre-specified in a manner of protocol agreement or indication of the network device.

For example, when one second-type active period group is included between every two adjacent first-type active periods, each second-type active period group includes a plurality of second-type active periods, an interval between every two adjacent second-type active periods in the plurality of second-type active periods in each second-type active period group is the same in time domain, and an interval between every two adjacent second-type active period groups is the same in time domain, the second DTX configuration indicates: a duration of a first cycle, where the first cycle is a cycle of a second-type active period group; a duration of a second cycle, where the second cycle is a cycle of a second-type active period included in the second-type active period group; a quantity of second-type active periods included in each second-type active period group; a time domain offset of a 1^{st} second-type active period relative to a 1^{st} first-type active period; and the duration of each second-type active period.

The first cycle may also be referred to as a second long DTX cycle, and the second cycle may also be referred to as a second short DTX cycle. The time domain offset of the 1^{st} second-type active period relative to the 1^{st} first-type active period may be understood as a time domain offset of a start position of the 1^{st} second-type active period relative to a start moment of the 1^{st} first-type active period, or a time domain offset of the start position of the 1^{st} second-type active period relative to an end moment of the 1^{st} first-type active period. However, it should be noted that, because the first-type active period may have an extended active period, when the end moment of the first-type active period is used as the start position to determine the time domain offset, whether the end moment of the first-type active period is an end moment of an unextended first-type active period or an end moment of an extended first-type active period may be pre-specified in a manner of protocol agreement or indication of the network device.

In an optional embodiment, the second DTX configuration further includes second information, and the second information indicates that the second DTX configuration is a configuration used for the low power wake up receiver.

In an optional embodiment, the first DTX configuration indicates a quantity of first-type active periods and a start position and a duration of a first-type active period.

For example, when an interval between every two adjacent first-type active periods is the same in time domain, the first DTX configuration may indicate a duration of a third cycle, and the start position and the duration of the first-type active period, and the third cycle is a cycle of the first-type active period. It should be understood that the third cycle may also be referred to as a first DTX cycle.

In an optional embodiment, the first DTX configuration further includes third information, and the third information indicates that the first DTX configuration is a configuration used for the main receiver.

In an optional embodiment, the method 600 further includes: A first network device sends the first DTX configuration and the second DTX configuration to a second network device. Correspondingly, the second network device receives the first DTX configuration and the second DTX configuration, and performs communication with another terminal device in at least one third-type active period or at least one fourth-type active period based on the first DTX configuration and the second DTX configuration, where the at least one third-type active period and the at least one fourth-type active period do not overlap in time domain.

For example, after receiving the first DTX configuration and the second DTX configuration, the second network device may send a third DTX configuration and a fourth DTX configuration to the another terminal based on the first DTX configuration and the second DTX configuration. The third DTX configuration is used to configure the at least one third-type active period, and the at least one third-type active period is configured to be used by a main receiver of a second terminal device to receive downlink data or send uplink data. The fourth DTX configuration is used to configure the at least one fourth-type active period, and the at least one fourth-type active period is configured to be used by a low power wake up receiver of the second terminal device to receive a low power wake up signal. The second terminal device is a terminal that accesses the second network device, and a first terminal is a terminal that accesses the first network device.

In this manner of exchanging the DTX configuration between the network devices, time division configuration between the network devices can be implemented (in other words, active periods of the network devices are staggered in time domain), and interference between the network devices is effectively reduced.

Optionally, when an extended active period triggered by an LP-WUS exists on a network device side, related information of the first-type extended active period may also be exchanged between the network devices. The related information may include a start position of the first extended active period, a duration of the first-type extended active period, or the like.

In an optional embodiment, the method 600 further includes: The first network device sends a first configuration of a measurement signal to the second network device, where the first configuration includes sending time of the measurement signal.

For example, the measurement signal includes a synchronization signal block (synchronization signal block, SSB), a channel state information-reference signal (channel state information-reference signal, CSI-RS), and the like.

The foregoing describes in detail an association relationship between two DTX configurations when the terminal device configures the two second DTX configurations. However, in an actual communication scenario, two of DTX configurations may not need to be configured for each terminal device. The following shows, with reference to two scenarios, several cases of whether the network device needs to configure second DTX configurations for a terminal device.

Scenario 1: Because an active period of a DTX configuration may include a measurement signal, for a terminal device in an idle state, whether second DTX needs to be configured for the terminal device may be determined based on a moving speed of the terminal device. For terminal devices moving at a low speed, detection on a measurement signal may be performed once at a longer interval. Therefore, second DTX may not need to be configured for the terminal devices moving at the low speed. However, for terminal devices moving at a high speed, detection on a measurement signal may be performed once at a shorter interval. Therefore, second DTX with a short cycle may be configured for the terminal devices moving at the high speed.

It should be understood that the network device may configure a first-type active period with a long cycle for each terminal device, and determine, in the first-type active period through sensing, through notification by a neighboring base station, or in another manner, whether there is a terminal device moving at a high speed in a cell.

Scenario 2: Because an active period of a DTX configuration may include an SSB, a first-type active period configured by the network device for the terminal device may include an SSB with a wide beam. The SSB of the wide beam is applicable to all terminal devices in a cell. However, there may be terminal devices that perform data transmission in some areas in the cell (which may be referred to as data transmission terminals for short). To obtain a better measurement result, an SSB with a narrow beam and a short cycle may be configured for the terminal devices. Therefore, for the data transmission terminal, the network device may continue to configure second DTX for the data transmission terminal.

It should be understood that quantities and directions of SSBs with narrow beams transmitted in different second-type active periods may be the same or different. In other words, a signal transmitted in the second-type active period may be dynamically adjusted.

It should be further understood that sequence numbers of the foregoing processes do not mean execution sequences. The execution sequences of the processes should be determined based on functions and internal logic of the processes, and should not be construed as any limitation on the implementation processes of embodiments of this application.

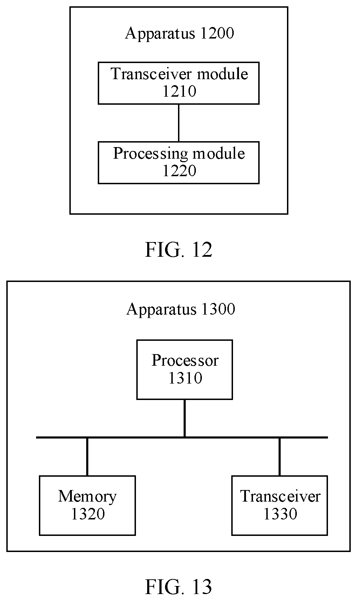

The foregoing describes in detail the communication method in embodiments of this application with reference to FIG. 6 to FIG. 11. The following describes in detail communication apparatuses in embodiments of this application with reference to FIG. 12 and FIG. 13.

FIG. 12 shows a communication apparatus 1200 according to an embodiment of this application. As shown in FIG. 12, the communication apparatus 1200 includes a transceiver module 1210 and a processing module 1220.

In a possible implementation, the communication apparatus 1200 is a terminal device or a chip of the terminal device.

For example, the transceiver module 1210 is configured to receive a plurality of DTX configurations from a network device, where any two of the plurality of DTX configurations are different, the plurality of DTX configurations include a first DTX configuration and a second DTX configuration, the first DTX configuration is used to configure at least one first-type active period, the at least one first-type active period is configured to be used by a main receiver to receive downlink data or send uplink data, the second DTX configuration is used to configure at least one second-type active period, the at least one second-type active period is configured to be used by a low power wake up receiver to receive a low power wake up signal, and the at least one first-type active period and the at least one second-type active period do not overlap in time domain. The processing module 1220 is configured to control the transceiver module 1210 to perform communication in the at least one first-type active period or the at least one second-type active period based on the first DTX configuration and the second DTX configuration.

Optionally, the plurality of DTX configurations are carried in a multicast message or a broadcast message.

Optionally, the transceiver module 1210 is further configured to receive the first DTX configuration, and receive the second DTX configuration in the at least one first-type active period.

Optionally, the processing module 1220 is further configured to determine the first DTX configuration from the plurality of DTX configurations. The transceiver module 1210 is further configured to receive first information in the at least one first-type active period, where the first information indicates the second DTX configuration in the plurality of DTX configurations.

Optionally, the second DTX configuration indicates a quantity of second-type active periods and a start position and a duration of each second-type active period.

Optionally, the second DTX configuration includes a duration of a first cycle of second DTX, a duration of a second cycle of second DTX, a quantity of second-type active periods in the first cycle, a time domain offset of a second-type active period relative to a first-type active period, and the duration of each second-type active period, where the second cycle is a cycle of the second-type active period included in the first cycle.

Optionally, the second DTX configuration further includes second information, and the second information indicates that the second DTX configuration is a configuration used for the low power wake up receiver.

Optionally, the transceiver module 1210 is specifically configured to receive the low power wake up signal in a second active period via the low power wake up receiver, where the second active period is any one of the at least one second-type active period. The processing module 1220 is specifically configured to: when the low power wake up signal is received, control the transceiver module 1210 to receive the downlink data in an extended active period, where a start position of the extended active period is determined based on a moment at which the terminal device receives the low power wake up signal.

Optionally, the transceiver module 1210 is specifically configured to receive the downlink data or send the uplink data in a first active period via the main receiver, where the first active period is any one of the at least one first-type active period.

Optionally, the first DTX configuration includes a duration of a first DTX cycle and a start position and a duration of a first-type active period.

Optionally, the first DTX configuration further includes third information, and the third information indicates that the first DTX configuration is a configuration used for the main receiver.

In an optional example, a person skilled in the art may understand that the communication apparatus 1200 may be specifically the terminal device in the foregoing embodiments, and the communication apparatus 1200 may be configured to perform procedures and/or steps corresponding to the terminal device in the foregoing method 600. To avoid repetition, details are not described herein again.

In another possible implementation, the communication apparatus 1200 is a network device or a chip of the network device.

For example, the transceiver module 1210 is configured to send a plurality of DTX configurations to a terminal device, where any two of the plurality of DTX configurations are different, the plurality of DTX configurations include a first DTX configuration and a second DTX configuration, the first DTX configuration is used to configure at least one first-type active period, the at least one first-type active period is configured to be used by the communication apparatus 1200 to send downlink data or receive uplink data, the second DTX configuration is used to configure at least one second-type active period, the at least one second-type active period is configured to be used by the communication apparatus 1200 to send a low power wake up signal, and the at least one first-type active period and the at least one second-type active period do not overlap in time domain. The processing module 1220 is configured to control the transceiver module 1210 to perform communication in the at least one first-type active period or the at least one second-type active period based on the first DTX configuration and the second DTX configuration.

Optionally, the plurality of DTX configurations are carried in a multicast message or a broadcast message.

Optionally, the transceiver module 1210 is specifically configured to send the first DTX configuration to the terminal device, and send the second DTX configuration to the terminal device in the at least one first-type active period.

Optionally, the processing module is further configured to determine the first DTX configuration from the plurality of DTX configurations. The transceiver module 1210 is further configured to send first information to the terminal device in the at least one first-type active period, where the first information indicates the second DTX configuration in the plurality of DTX configurations.

Optionally, the second DTX configuration indicates a quantity of second-type active periods and a start position and a duration of each second-type active period.

Optionally, the second DTX configuration includes a duration of a first cycle of second DTX, a duration of a second cycle of second DTX, a quantity of second-type active periods in the first cycle, a time domain offset of a 1^{st} second-type active period relative to a first-type active period, and the duration of each second-type active period, where the second cycle is a cycle of the second-type active period included in the first cycle.

Optionally, the second DTX configuration further includes second information, and the second information indicates that the second DTX configuration is a configuration used for a low power wake up receiver.

Optionally, the transceiver module 1210 is specifically configured to: send the low power wake up signal in a second active period, where the second active period is any one of the at least one second-type active period; and send the downlink data to the terminal device in an extended active period, where a start position of the extended active period is determined based on sending time of the low power wake up signal, and the downlink data is to-be-sent data obtained in a sleep period that is before the second active period.

Optionally, the processing module 1220 is further configured to determine, based on time at which the downlink data is obtained, that a next active period that arrives is the second active period.

Optionally, the processing module 1220 is specifically configured to receive the downlink data or send the uplink data in a first active period via a main receiver, where the first active period is any one of the at least one first-type active period.

Optionally, the first DTX configuration includes a duration of a first DTX cycle and a start position and a duration of a first-type active period in the first DTX cycle.

Optionally, the first DTX configuration further includes third information, and the third information indicates that the first DTX configuration is a configuration used for the main receiver.

Optionally, the transceiver module 1210 is further configured to send the first DTX configuration and the second DTX configuration to a second network device.

Optionally, the transceiver module 1210 is further configured to send a first configuration of a measurement signal to the second network device, where the first configuration includes sending time of the measurement signal.

For example, the transceiver module 1210 is configured to receive a first DTX configuration and a second DTX configuration from a first network device, where the first DTX configuration is used to configure at least one first-type active period, the at least one first-type active period is configured to be used by a main receiver to receive downlink data or send uplink data, the second DTX configuration is used to configure at least one second-type active period, the at least one second-type active period is configured to be used by a low power wake up receiver to receive a low power wake up signal, and the at least one first-type active period and the at least one second-type active period do not overlap in time domain. The processing module 1220 is configured to control the transceiver module 1210 to perform communication in at least one third-type active period or at least one fourth-type active period based on the first DTX configuration and the second DTX configuration, where the at least one third-type active period and the at least one fourth-type active period do not overlap in time domain, the at least one third-type active period and the at least one first-type active period do not overlap in time domain, and the at least one fourth-type active period and the at least one second-type active period do not overlap in time domain.

In an optional example, a person skilled in the art may understand that the communication apparatus 1200 may be specifically the network device in the foregoing embodiments, and the communication apparatus 1200 may be configured to perform procedures and/or steps corresponding to the network device in the foregoing method 600. To avoid repetition, details are not described herein again.

It should be understood that the communication apparatus 1200 herein is embodied in a form of a function module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the communication apparatus 1200 may be specifically the terminal device or the network device in the foregoing embodiments, or functions of the terminal device or the network device in the foregoing embodiments may be integrated into the communication apparatus 1200, and the communication apparatus 1200 may be configured to perform procedures and/or steps corresponding to the terminal device or the network device in the foregoing method embodiments. To avoid repetition, details are not described herein again.

The communication apparatus 1200 has a function of implementing corresponding steps performed by the data processing device in the foregoing method. The foregoing function may be implemented by hardware, or may be implemented by hardware executing corresponding software. The hardware or the software includes one or more modules corresponding to the function. For example, the transceiver module 1210 may be a communication interface, for example, a transceiver interface.

FIG. 13 shows another communication apparatus 1300 according to an embodiment of this application. The communication apparatus 1300 includes a processor 1310, a memory 1320, and a transceiver 1330. The processor 1310, the memory 1320, and the transceiver 1330 are connected through an internal connection path. The memory 1320 is configured to store instructions, and the processor 1310 is configured to execute the instructions stored in the memory 1320, so that the communication apparatus 1300 can perform the communication method provided in the foregoing method embodiments.

It should be understood that functions of the communication apparatus 1200 in the foregoing embodiment may be integrated into the communication apparatus 1300, and the communication apparatus 1300 may be configured to perform steps and/or procedures corresponding to the terminal device in the foregoing method embodiments, or the communication apparatus 1300 may be configured to perform steps and/or procedures corresponding to the network device in the foregoing method embodiments. Optionally, the memory 1320 may include a read-only memory and a random access memory, and provide the instructions and data to the processor. A part of the memory may further include a non-volatile random access memory. For example, the memory may further store information about a device type. The processor 1310 may be configured to execute the instructions stored in the memory. In addition, when executing the instructions, the processor 1310 may perform the steps and/or procedures corresponding to the terminal device in the foregoing method embodiments, or the processor 1310 may perform the steps and/or procedures corresponding to the network device in the foregoing method embodiments.

It should be understood that, in this embodiment of this application, the processor 1310 may be a central processing unit (central processing unit, CPU) or a baseband processor, or the processor 1310 may be another general-purpose processor, a digital signal processor (digital signal processor, DSP), an ASIC, a field programmable gate array (field programmable gate array, FPGA) or another programmable logic device, a discrete gate or a transistor logic device, a discrete hardware component, or the like. The processor 1310 may be a microprocessor, or the processor 1310 may be any conventional processor or the like.

In an implementation process, steps of the foregoing method 600 may be completed by using an integrated logic circuit of hardware in the processor or instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads the instructions in the memory and completes the steps in the foregoing methods in combination with hardware of the processor. To avoid repetition, details are not described herein again.

This application further provides a computer-readable medium. The computer-readable medium stores a computer program. When the computer program is executed by a computer, the method in any one of the foregoing method embodiments is implemented.

This application further provides a computer program product including instructions. When the computer program product is executed by a computer, the method in any one of the foregoing method embodiments is implemented.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each specific application. However, it should not be considered that this implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, or each unit may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer terminal (which may be a personal computer, a server, or a network terminal) to perform all or some of the steps of the methods described in embodiments of this application. The storage medium includes media that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, applied to a terminal device, wherein the terminal device comprises a main receiver and a low power wake up receiver, and the method comprises:
receiving a plurality of discontinuous transmission DTX configurations from a network device, wherein any two of the plurality of DTX configurations are different, the plurality of DTX configurations comprise a first DTX configuration and a second DTX configuration, the first DTX configuration is used to configure at least one first-type active period, the at least one first-type active period is configured to be used by the main receiver to receive downlink data or send uplink data, the second DTX configuration is used to configure at least one second-type active period, the at least one second-type active period is configured to be used by the low power wake up receiver to receive a low power wake up signal, and the at least one first-type active period and the at least one second-type active period do not overlap in time domain; and
performing communication with the network device in the at least one first-type active period or the at least one second-type active period based on the first DTX configuration and the second DTX configuration.

2. The method according to claim 1, wherein the plurality of DTX configurations are carried in a multicast message or a broadcast message.

3. The method according to claim 1 or 2, wherein receiving the plurality of DTX configurations comprises:
receiving the first DTX configuration; and
receiving the second DTX configuration in the at least one first-type active period of the first DTX configuration.

4. The method according to claim 1 or 2, wherein the method further comprises:
determining the first DTX configuration from the plurality of DTX configurations; and
receiving first information in the at least one first-type active period of the first DTX configuration, wherein the first information indicates the second DTX configuration in the plurality of DTX configurations.

5. The method according to any one of claims 1 to 4, wherein the second DTX configuration indicates a quantity of second-type active periods and a start position and a duration of each second-type active period.

6. The method according to any one of claims 1 to 5, wherein the second DTX configuration indicates at least one of the following: a duration of a first cycle, wherein the first cycle is a cycle of a second-type active period group; a duration of a second cycle, wherein the second cycle is a cycle of a second-type active period comprised in the second-type active period group; a quantity of second-type active periods comprised in each second-type active period group; a time domain offset of a 1^{st} second-type active period relative to a 1^{st} first-type active period; or a duration of each second-type active period.

7. The method according to any one of claims 1 to 6, wherein the second DTX configuration further comprises second information, and the second information indicates that the second DTX configuration is a configuration used for the low power wake up receiver.

8. The method according to any one of claims 1 to 7, wherein performing communication in the at least one first-type active period or the at least one second-type active period based on the first DTX configuration and the second DTX configuration comprises:
receiving the low power wake up signal in a second active period via the low power wake up receiver, wherein the second active period is any one of the at least one second-type active period; and
when receiving the low power wake up signal, waking up the main receiver to receive the downlink data in an extended active period, wherein a start position of the extended active period is determined based on a moment at which the terminal device receives the low power wake up signal.

9. The method according to any one of claims 1 to 7, wherein performing communication in the at least one first-type active period or the at least one second-type active period based on the first DTX configuration and the second DTX configuration comprises:
receiving the downlink data or sending the uplink data in a first active period via the main receiver, wherein the first active period is any one of the at least one first-type active period.

10. The method according to any one of claims 1 to 9, wherein the first DTX configuration indicates a duration of a third cycle and a start position and a duration of a first-type active period, and the third cycle is a cycle of the first-type active period.

11. The method according to any one of claims 1 to 10, wherein the first DTX configuration further comprises third information, and the third information indicates that the first DTX configuration is a configuration used for the main receiver.

12. A communication method, applied to a network device, wherein the method comprises:
sending a plurality of discontinuous transmission DTX configurations to a terminal device, wherein any two of the plurality of DTX configurations are different, the plurality of DTX configurations comprise a first DTX configuration and a second DTX configuration, the first DTX configuration is used to configure at least one first-type active period, the at least one first-type active period is configured to be used by the network device to send downlink data or receive uplink data, the second DTX configuration is used to configure at least one second-type active period, the at least one second-type active period is configured to be used by the network device to send a low power wake up signal, and the at least one first-type active period and the at least one second-type active period do not overlap in time domain; and
performing communication with the terminal device in the at least one first-type active period or the at least one second-type active period based on the first DTX configuration and the second DTX configuration.

13. The method according to claim 12, wherein the plurality of DTX configurations are carried in a multicast message or a broadcast message.

14. The method according to claim 12 or 13, wherein sending the plurality of discontinuous transmission DTX configurations to the terminal device comprises:
sending the first DTX configuration to the terminal device; and
sending the second DTX configuration to the terminal device in the at least one first-type active period of the first DTX configuration.

15. The method according to claim 12 or 13, wherein the method further comprises:
determining the first DTX configuration from the plurality of DTX configurations; and
sending first information to the terminal device in the at least one first-type active period of the first DTX configuration, wherein the first information indicates the second DTX configuration in the plurality of DTX configurations.

16. The method according to any one of claims 12 to 15, wherein the second DTX configuration indicates a quantity of second-type active periods, a start position of each second-type active period, or a duration of each second-type active period.

17. The method according to any one of claims 12 to 16, wherein the second DTX configuration indicates at least one of the following: a duration of a first cycle, wherein the first cycle is a cycle of a second-type active period group; a duration of a second cycle, wherein the second cycle is a cycle of a second-type active period comprised in the second-type active period group; a quantity of second-type active periods comprised in each second-type active period group; a time domain offset of a 1^{st} second-type active period relative to a 1^{st} first-type active period; or a duration of each second-type active period.

18. The method according to any one of claims 12 to 17, wherein the second DTX configuration further comprises second information, and the second information indicates that the second DTX configuration is a configuration used for the low power wake up receiver.

19. The method according to any one of claims 12 to 18, wherein performing communication in the at least one first-type active period or the at least one second-type active period based on the first DTX configuration and the second DTX configuration comprises:
sending the low power wake up signal in a second active period, wherein the second active period is any one of the at least one second-type active period; and
sending the downlink data to the terminal device in an extended active period, wherein a start position of the extended active period is determined based on sending time of the low power wake up signal, and the downlink data is to-be-sent data obtained in a sleep period that is before the second active period.

20. The method according to claim 19, wherein the method further comprises:
determining, based on time at which the downlink data is obtained, that a next active period that arrives is the second active period.

21. The method according to any one of claims 12 to 18, wherein performing communication in the at least one first-type active period or the at least one second active period based on the first DTX configuration and the second DTX configuration comprises:
receiving the downlink data or sending the uplink data in a first active period via a main receiver of the terminal device, wherein the first active period is any one of the at least one first-type active period.

22. The method according to any one of claims 12 to 21, wherein the first DTX configuration indicates a duration of a third cycle and a start position and a duration of a first-type active period, and the third cycle is a cycle of the first-type active period.

23. The method according to any one of claims 12 to 22, wherein the first DTX configuration further comprises third information, and the third information indicates that the first DTX configuration is a configuration used for the main receiver of the terminal device.

24. The method according to any one of claims 12 to 23, wherein the method further comprises:
sending the first DTX configuration and the second DTX configuration to a second network device.

25. The method according to claim 24, wherein the method further comprises:
sending a first configuration of a measurement signal to the second network device, wherein the first configuration comprises sending time of the measurement signal.

26. A communication apparatus, comprising a module configured to implement the method according to any one of claims 1 to 25.

27. A communication apparatus, comprising a processor, wherein the processor is configured to execute a computer program stored in a memory, to enable the communication apparatus to implement the method according to any one of claims 1 to 25.

28. The apparatus according to claim 27, wherein the communication apparatus further comprises the memory, and the memory is configured to store the computer program.

29. A computer-readable storage medium, wherein the computer-readable storage medium stores a computer program, and when the computer program is executed by a processor, the method according to any one of claims 1 to 25 is implemented.

30. A communication system, comprising a terminal device and a network device, wherein the terminal device is configured to implement the method according to any one of claims 1 to 11, and the network device is configured to perform the method according to any one of claims 12 to 25.
